# EUROPÄISCHE PATENTSCHRIFT

(11) **EP 1 128 983 B1**
(45) Veröffentlichungstag und Bekanntmachung des Hinweises auf die Patenterteilung: **02.05.2002**
(21) Anmeldenummer: 99953942.2
(22) Anmeldetag: 27.10.1999
(51) Int. Cl.: B60Q 1/26

(54) **RÜCKLEUCHTENEINHEIT FÜR EIN FAHRZEUG UND SCHALTUNGSANORDNUNG**
REAR LIGHT UNIT FOR A VEHICLE AND CIRCUIT SYSTEM
BLOC FEUX ARRIERE DE VEHICULE ET CONFIGURATION DE CIRCUIT

(30) Priorität: 12.11.1998 DE 19852311
(43) Veröffentlichungstag der Anmeldung: 05.09.2001
(73) Patentinhaber: Volkswagen Aktiengesellschaft, 38436 Wolfsburg (DE)
(72) Erfinder: WERNER, Michael, D-38106 Braunschweig (DE); MÜLLER, Michael, D-38518 Gifhorn (DE)
(74) Vertreter: Geske, Kerstin
(86) Internationale Anmeldenummer: EP9908109
(87) Internationale Veröffentlichungsnummer: WO0029253

(56) Entgegenhaltungen:
- DE-A- 3 503 585
- DE-U- 29 818 264
- US-A- 5 055 983

## Beschreibung

Die Erfindung betrifft eine Rückleuchteneinheit für ein Fahrzeug, insbesondere für ein Personenkraftfahrzeug, die mehrere Reflektoren und diesen zugeordnete Glühlampen für ein Schlußlicht, ein Bremslicht und ein Nebelrücklicht und Reflektoren und Glühlampen für weitere Lichter aufweist, und eine Schaltungsanordnung für die Rückleuchteneinheit.

Eine Rüchleuchteneinheit gemäß dem Oberbegriff des Auspruchs 1 ist allgemein bekannt.

Die meisten Fahrzeuge werden derzeitig mit Rückleuchteneinheiten ausgerüstet, in denen mehrere Reflektoren und diesen zugeordnete Glühlampen in einer sogenannten Mehrkammerleuchte zusammengefaßt sind, wobei für jedes Signallicht eine separate Kammer mit einem Reflektor ausgebildet ist. Den Reflektoren sind dabei einzelne Abschnitte einer Lichtscheibe zugeordnet, die diese Mehrkammerleuchte abdeckt und die in einer Karosserieöffnung eingesetzt ist und mit dieser bündig abschließt. Den Lichtscheibenabschnitten für das Schlußlicht, das Bremslicht und das Nebelrücklicht ist eine speziell gestaltete Optikscheibe vorgeschaltet, beispielsweise mit aneinandergrenzend und horizontal verlaufenden Zylinderlinsen, die das von der Glühlampe ausgesendete und parallel gerichtet auf diese auftreffende Licht sammeln und zugleich auch für eine ausreichende Vertikalstreuung sorgen. Eine derartige Rückleuchteneinheit ist in der EP 0 422 095 A2 beschrieben.

Eine solche Rückleuchteneinheit beansprucht durch die Vielzahl von anzuordnenden und mit Reflektoren ausgestatteten Kammern und dem geforderten Mindestabstand zwischen dem Bremslicht und dem Nebelrücklicht einen entsprechend großen Anordnungsraum am Fahrzeugheck, was in Abhängigkeit von der Fahrzeuggröße optisch als störend empfunden werden kann.

Es ist Aufgabe der Erfindung, eine Rückleuchteneinheit nach dem Oberbegriff des Anspruchs 1 zu schaffen, mit der bei der gleichen Anzahl von Signallichtern die Gestaltungsmöglichkeiten verbessert sind und eine Kompaktanordnung ermöglicht ist, und eine Schaltungsanordnung für diese anzugeben.

Diese Aufgabe wird bei einer Rückleuchteneinheit nach dem Oberbegriff des Anspruchs 1 durch dessen kennzeichnende Merkmale und für die Schaltungsanordnung durch die Merkmale des Anspruchs 9 gelöst.

Die Erfindung besteht darin, daß das Schlußlicht aus mehreren Reflektoren und Glühlampen gebildet ist, von denen wenigstens zwei Reflektoren Glühlampen mit zwei Leistungsstufen aufweisen, deren höhere Leistungsstufe der Bildung des Brems- und des Nebelrücklichtes dient. Diese zwei Reflektoren sind in einem Abstand angeordnet, der wenigstens dem gesetzlich geforderten Mindestabstand zwischen dem Brems- und Nebelrücklicht entspricht. Mehrere Reflektoren werden auf diese Weise mehrfach genutzt, und es erschließen sich neue Gestaltungsmöglichkeiten und auch eine Kompaktanordnung der Lichter. Dabei können die Reflektoren für das Schluß-, das Brems- und das Nebelrücklicht in Reihe angeordnet sein und dabei zwei Reflektorenpaare bilden, von denen die beiden außenliegenden Reflektoren zur Bildung des Bremslichtes und des Nebelrücklichtes vorgesehen sind und Glühlampen mit zwei Leistungsstufen aufweisen.

Alternativ dazu können bei dieser Anordnung aber auch alle Reflektoren Glühlampen mit zwei Leistungsstufen aufweisen und zur Bildung des Bremslichtes beitragen, wenn das Nebelrücklicht, das durch einen außenliegenden Reflektor eines der Reflektorenpaare gebildet ist, nicht in Gebrauch ist. Bei Gebrauch desselben wird nur der außenliegende Reflektor des anderen Reflektorpaares zur Bildung des Bremslichtes benutzt, so daß der vorgeschriebene Mindestabstand zwischen Brems und Nebelrücklicht eingehalten ist. Die Ansteuerung der einzelnen Glühlampen - bzw. bei Glühlampen mit verschiedenen Leistungen alternativ oder in Addition der einzelnen Leistungsstufen - kann über eine elektronische Schaltungsanordnung erfolgen, die nicht Gegenstand der Erfindung ist.

Für das Bremslicht und das Nebelrücklicht werden als Glühlampen mit zwei Leistungsstufen Zweifadenlampen verwendet. Das bedeutet, daß in dem Falle, in dem alle das Schlußlicht bildenden Reflektoren zugleich für die Bildung des Bremslichtes verwendet werden, diese mit Zweifadenlampen bestückt sind, im anderen Falle nur der jeweils außenliegende der beiden einander zugeordneten Reflektorenpaare.

Die Reflektoren können zur Ausbildung eines neuartigen Designs so gestaltet sein, daß die Austrittsöffnungen der jeweils zu einem Paar vereinten Reflektoren in der Hauptansicht eine Kreisfläche bilden. Die die Reflektoren trennende Wand erscheint als geradliniger Steg, der außerhalb der Mitte der Kreisfläche ausgebildet sein kann, wobei der das Bremslicht und das Nebelrücklicht bildende Reflektor jeweils größer als der andere paarbildende und innenliegende Reflektor ist. Die trennenden Wände der beiden Reflektorenpaare sind parallel und wenigstens im geforderten Mindestabstand zwischen dem Bremslicht und dem Nebelrücklicht angeordnet.

Die Anordnung der Reflektorenpaare kann vertikal im Abstand übereinander erfolgen, wobei die trennenden Wände horizontal ausgerichtet sind. Im Raum zwischen den Reflektorpaaren kann vorteilhaft der Reflektor für das Rückfahrlicht und jeweils außenseitig neben diesem der Reflektor für das Blinklicht angeordnet sein. Die Rückleuchteneinheit ist jeweils zum Kotflügel zu gekrümmt, so daß die Lichter, insbesondere die Signallichter auch von der Seite zu erkennen sind.

Den einander zugewandten, d.h. innenliegenden Reflektoren der beiden Reflektorenpaare, dem Reflektor für das Nebelrücklicht und das Bremslicht ist eine Streu-/ Zylinderoptik zugeordnet. Im übrigen sind in bekannter Weise vor den Reflektoren Lichtscheiben angeordnet, damit das jeweilige Licht in der vorgeschriebenen Farbe ausgesendet wird.

Eine erfindungsgemäße Schaltungsanordnung zur Schaltung einer Rückleuchteneinheit mit vier Reflektoren zur Bildung des Schlußlichtes, des Bremslichtes und des Nebelrücklichtes, bei der jedem Reflektor eine Glühlampe mit zwei Leistungsstufen zugeordnet ist und bei der die Leistungsstufen entweder einzeln oder in Addition betrieben werden, weist zwei Stromkreise zum Schalten der Glühlampen und der Leistungsstufen auf, von denen der für die Stromversorgung der höheren Leistungsstufe vorgesehene Stromkreis einen (Kreuz-) Schalter aufweist, der bei Einschaltung des Nebelrücklichtes zugleich die Stromversorgung der zur Bildung des Bremslichtes nicht vorgesehenen Glühlampen unterbricht und umgekehrt. Dabei kann der Stromkreis eine über den Bremslichtschalter geführte erste Leitung aufweisen, mit der alle Glühlampen verbunden sind, wobei vor der Glühlampe zur Bildung des Nebelrücklichtes eine Diode angeordnet ist, und eine zweite, mit der letzteren Glühlampe verbundene Leitung aufweisen, und der (Kreuz-) Schalter kann in der zweiten Leitung und zwischen der Glühlampe für das Bremslicht, das bei Gebrauch des Nebelrücklichtes vorgesehen ist, und der nachfolgenden Glühlampe in der ersten Leitung angeordnet sein.

Alternativ dazu kann der der Stromversorgung der höheren Leistungsstufe dienende Stromkreis einen als Zweistellungsschalter ausgebildeten Nebelrücklichtschalter aufweisen, der in einer Stellung mit dem Nebelrücklicht und zugleich über ein erstes Schaltglied des Bremslichtschalters mit dem im geforderten Mindestabstand vom Nebelrücklicht angeordneten Bremslicht verbunden ist, und der in der anderen Stellung über ein zweites Schaltglied des Bremslichtschalters und eine Leitung mit sämtlichen Glühlampen verbunden ist, wobei in der Verbindung zum Nebelrücklicht und zu dem im Mindestabstand zu diesem angeordneten Reflektor (Bremslicht) jeweils eine Diode eingesetzt ist.

Alle diese Schaltungsanordnungen ermöglichen es, mit einfachen Schaltungsmitteln die erfindungsgemäße Rückleuchteneinheit mit dem gesetzlich geforderten Mindestabstand zwischen dem Bremslicht und dem Nebelrücklicht in einer Kompaktanordnung mit verschiedenen Gestaltungsmöglichkeiten zu betreiben.

Die Erfindung wird nachstehend anhand einer Rückleuchteneinheit für einen Personenkraftwagen erläutert. In der zugehörigen Zeichnung zeigen schematisch:
- Fig. 1:: eine Hauptansicht der Rückleuchteneinheit,
- Fig. 2:: einen Vertikalschnitt ll-ll durch die Rückleuchteneinheit,
- Fig. 3a bis 3d:: eine Anordnung des Schluß-, Brems und Nebelrücklichtes in der Rückleuchteneinheit nach Fig. 1 mit verschiedenen Betriebszuständen,
- Fig. 4a bis 4d:: eine weitere Anordnung des Schluß-, Brems- und Nebelrücklichtes in der Rückleuchteneinheit nach Fig. 1 mit verschiedenen Betriebszuständen,
- Fig. 5:: eine Schaltungsanordnung für die Rückleuchteneinheit,
- Fig. 6:: eine andere Ausführung dieser Schaltungsanordnung und
- Fig. 7:: eine alternative Schaltungsanordnung für die Rückleuchteneinheit.

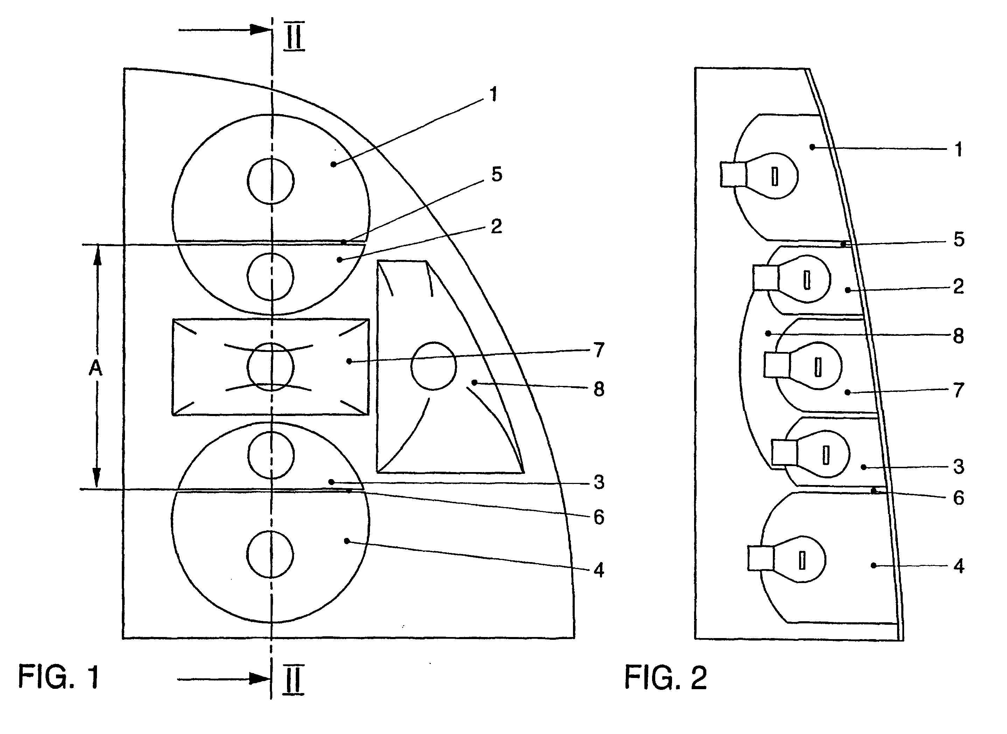

In Fig. 1 und 2 ist eine erfindungsgemäße Rückleuchteneinheit für einen Personenkraftwagen in der Hauptansicht, wie sie sich am Fahrzeugheck ergibt, und in einem Schnitt dargestellt. Die Rückleuchteneinheit weist vier Reflektoren 1 bis 4 zur Bildung des Schlußlichtes auf, von denen die Reflektoren 1 und 2 und die Reflektoren 3 und 4 jeweils zu einem Paar zusammengefaßt und vertikal übereinander angeordnet sind. Jedes Reflektorenpaar bildet eine Kreisfläche, in der die Reflektoren 1 und 2 bzw. 3 und 4 infolge ihrer unterschiedlichen Größe außermittig durch eine als Steg erscheinende Trennwand 5 bzw. 6 voneinander getrennt sind. Die beiden außenliegenden Reflektoren 1 und 4 werden zur Bildung des Bremslichtes und des Nebelrücklichtes genutzt. Die Trennwände 5 und 6 sind im gesetzlich geforderten Mindestabstand (A) für das Bremslicht und das Nebelrücklicht von 100,2 mm (in DE) angeordnet. Zwischen den Reflektorenpaaren ist ein Reflektor 7 für das Rückfahrlicht und neben diesem und fahrzeugaußenseitig ein Reflektor 8 für das Blinklicht angeordnet.

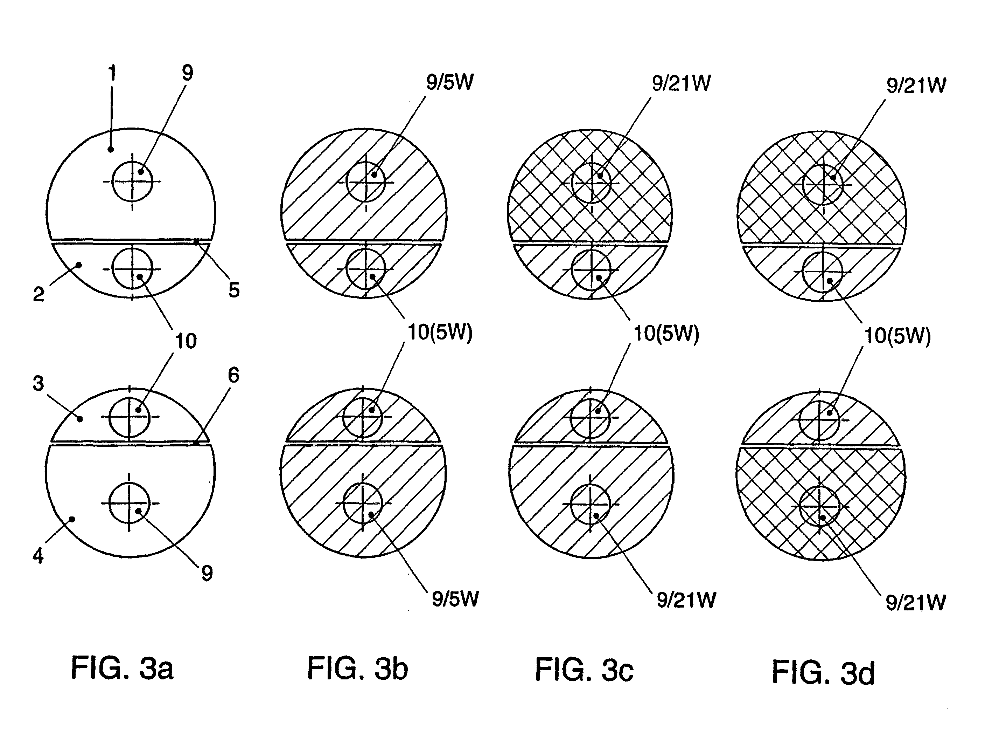

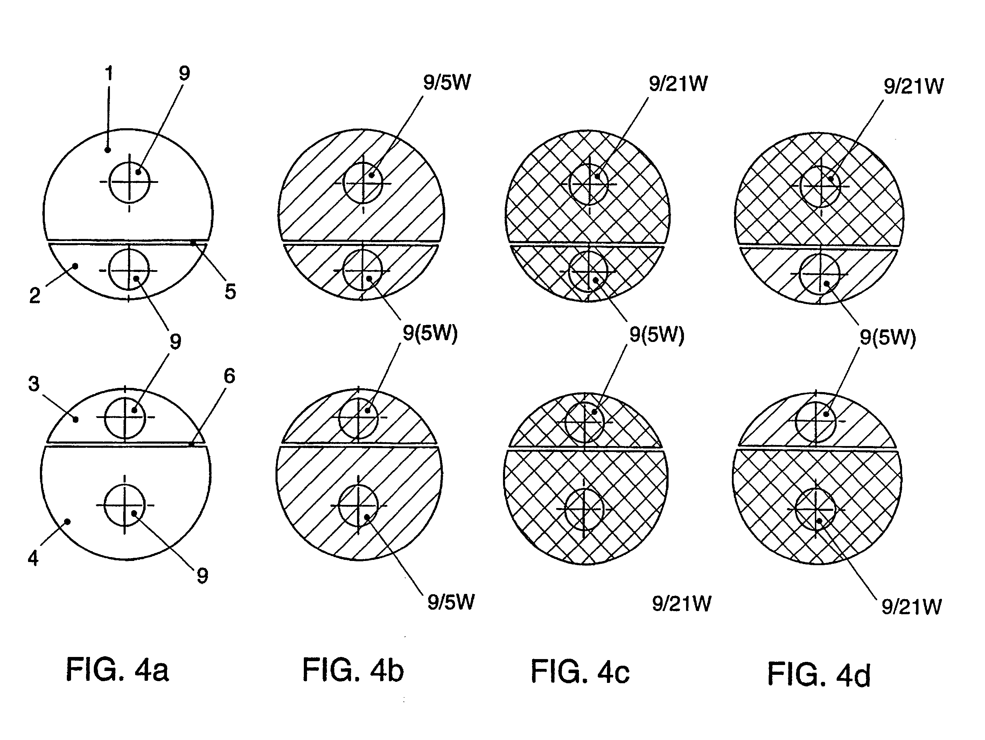

In den Fig. 3a bis 3d und 4a bis 4d ist jeweils die Anordnung der beiden Reflektorenpaare zur Bildung des Schluß-, Brems- und Nebelrücklichtes mit verschiedenen Betriebszuständen dargestellt. In den Fig. 3a bis 3d sind die Reflektoren 1 und 4 jeweils mit einer Zweifadenlampe 9 mit den Leistungen 5 W und 21 W und die Reflektoren 2 und 3 jeweils mit einer Einfadenlampe 10 mit der Leistung von 5 W bestückt. Fig. 3a zeigt die Glühlampen im ausgeschalteten Zustand. In Fig. 3b sind die Einfadenlampen 10 und die Zweifadenlampen 9 mit der niedrigen Leistungsstufe von 5 W zur Bildung des Schlußlichtes angeschaltet. Jedes Reflektorenpaar erscheint als einheitliche kreisrunde Rückleuchte. Die Trennwände 5 und 6 sind nicht mehr zu erkennen. In Fig. 3c ist, ausgelöst durch eine Bremspedalbetätigung, das Bremslicht zugeschaltet, indem die Zweifadenlampe 9 im Reflektor 1 auf ihre höhere Leistungsstufe umgeschaltet oder mit ihrer höheren Leistungsstufe zugeschaltet ist. Das Bremslicht strahlt wesentlich intensiver als das Schlußlicht und hebt sich deutlich von diesem ab. Fig. 3d zeigt den Betriebszustand, bei dem das Nebelrücklicht eingeschaltet ist, wozu die Zweifadenlampe 9 im Reflektor 4 nur oder zusätzlich mit ihrer höheren Leistungsstufe betrieben wird. Das Nebelrücklicht strahlt ebenso intensiv wie das Bremslicht, ist aber von diesem durch den eingehaltenen Abstand (A) deutlich zu unterscheiden, zumal das Bremslicht nur zeitweilig aufleuchtet. Die in den Fig. 3c und 3d dargestellten Betriebszustände bezüglich des Brems- und des Nebelrücklichtes sind auch gegeben, wenn das Schlußlicht nicht eingeschaltet ist. Für diesen Fall ist Fig. 3a anstelle von Fig. 3b der Ausgangszustand.

In den Fig. 4a bis 4d sind alle Reflektoren mit einer Zweifadenlampe 9 mit den Leistungen 5 W und 21 W bestückt. Fig. 4a zeigt die Glühlampen im ausgeschalteten Zustand. Fig. 4b zeigt das Schlußlicht, zu dessen Bildung alle Zweifadenlampen 9 mit der Leistung 5 W geschaltet sind. Bei einem Bremsvorgang werden sämtliche Zweifadenlampen 9 auf 21 W geschaltet oder die höhere Leistungsstufe von 21 W wird zugeschaltet, so daß das Schlußlicht vollständig vom Bremslicht überlagert ist (Fig. 4c). Für den Fall der Benutzung des Nebelrücklichtes, das durch den Reflektor 4 und die diesem zugeordnete und auf 21 W geschaltete oder zusätzlich mit 21 W betriebene Zweifadenlampe 9 gebildet wird, wird das Bremslicht nicht durch alle Reflekoren 1 - 4, sondern lediglich durch den Reflektor 1 und die diesem zugeordnete und auf 21 W geschaltete oder zusätzlich mit 21 W betriebene Zweifadenlampe 9 gebildet, wie in Fig. 4d gezeigt ist. Die in den Fig. 4c und 4d dargestellten Betriebszustände bezüglich des Brems- und des Nebelrücklichtes sind auch gegeben, wenn das Schlußlicht nicht eingeschaltet ist. Für diesen Fall ist Fig. 4a anstelle von Fig. 4b der Ausgangszustand.

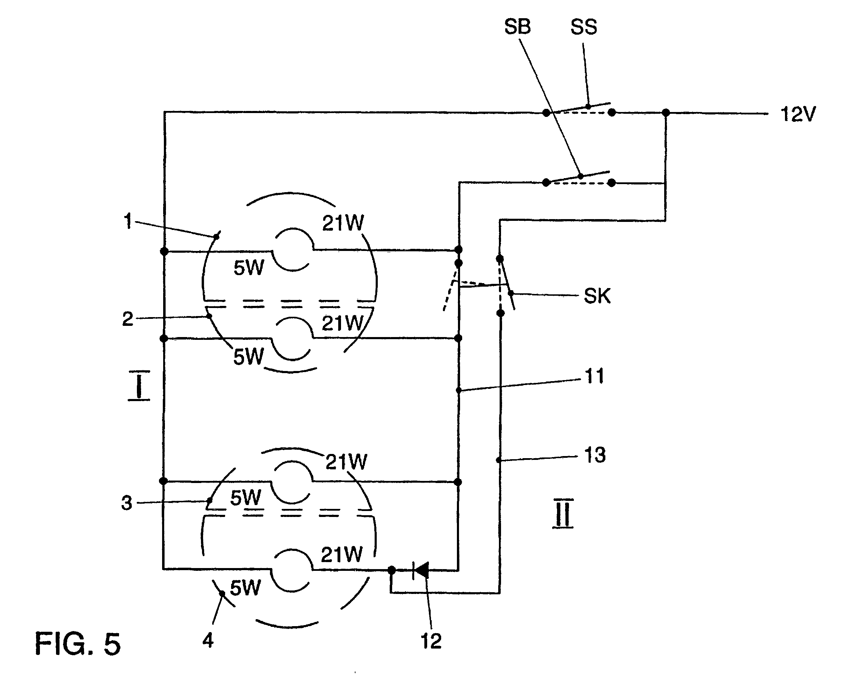

In Fig. 5 ist eine erste Schaltungsanordnung für eine Rückleuchteneinheit mit vier Reflektoren 1 - 4 zur Bildung des Schlußlichtes (Reflektoren 1 - 4), des Bremslichtes (Reflektoren 1 - 4, bei Gebrauch des Nebelrücklichtes nur Reflektor 4) und des Nebelrücklichtes (Reflektor 4) gezeigt. Jedem Reflektor 1 - 4 ist eine Glühlampe 9 mit den Leistungsstufen 5 W und 21 W zugeordnet. Bei Nichtgebrauch des Nebelrücklichtes (Reflektor 4) werden alle Glühlampen 9 zur Bildung des Bremslichtes (Reflektoren 1 - 4) mit der höheren Leistungsstufe 21 W betrieben und bei Gebrauch des Nebelrücklichtes (Reflektor 4) nur die Glühlampe 9 des Reflektors 1, der zum Nebelrücklicht im gesetzlich geforderten Mindestabstand (A) angeordnet ist. Dazu weist die Schaltungsanordnung zwei Stromkreise I und 11 auf, von denen der Stromkreis I die Glühlampen 9 in der Leistungsstufe 5 W über einen Schlußlichtschalter SS versorgt. Der Stromkreis II weist eine erste Leitung 11 mit einem Bremslichtschalter SB auf, mit der alle Glühlampen 9 verbunden sind, wobei vor der Glühlampe 9 des Reflektors 4 eine Diode 12 zur Sicherstellung des Stromdurchganges in nur einer Richtung angeordnet ist, und eine zweite Leitung 13 auf, über die nur die Glühlampe 9 des Reflektors 4 mit Strom versorgt wird, sowie einen mit beiden Leitungen 11 und 13 in Wirkverbindung stehenden (Kreuz-) Schalter SK.

Über den Schlußlichtschalter SS und den Stromkreis I werden alle Glühlampen 9 in der niedrigen Leistungsstufe 5 W ein oder ausgeschaltet. Wird bei ausgeschaltetem Schlußlicht und Nichtgebrauch des Nebelrücklichtes - Stellung des (Kreuz-) Schalters SK so, daß die Leitung 13 unterbrochen und die Leitung 11 geschlossen ist - der Bremslichtschalter SB betätigt (geschlossen), so werden alle Glühlampen 9 in der Leistungsstufe 21 W mit Strom versorgt, und alle Reflektoren 1 -4 bilden das Bremslicht.

Bei eingeschaltetem Schlußlicht - Schlußlichtschalter SS geschlossen und alle Glühlampen 9 werden mit 5 W betrieben und bilden das Schlußlicht - und Nichtgebrauch des Nebelrücklichtes werden bei Betätigung (Schließung) des Bremslichtschalters SB sämtliche Glühlampen 9 zusätzlich in der Leistungsstufe 21 W betrieben.

Durch Betätigung (Kreuz-) Schalters SK, mit der Folge einer Schließung der Leitung 13 und einer Unterbrechung der Leitung 11, bei eingeschaltetem (oder ausgeschaltetem) Schlußlicht wird das Nebelrücklicht eingeschaltet, indem die Glühlampe 9 im Reflektor 4 zusätzlich (bzw. ausschließlich) mit 21 W brennt. Die Unterbrechung der Leitung 11 führt dazu, daß die Glühlampen 9 der Reflektoren 2 und 3 in der Leistungsstufe 21 W nicht mehr mit Strom versorgt werden. Die Glühlampe 9 des Reflektors 4 wird über die Leitung 11 ebenfalls nicht mehr versorgt, aber über die Leitung 13. Damit über diese Leitung 13 eine Stromversorgung der Glühlampen 9 der Reflektoren 2 und 3 verhindert wird, ist die Diode 12 in die Leitung 11 eingesetzt. Wird nun der Bremslichtschalter SB betätigt, so wird nur die Gluhlampe 9 im Reflektor 1 in der Leitungsstufe 21 W mit Strom versorgt und zur Bildung des Bremslichtes benutzt. Wird der (Kreuz-) Schalter SK betätigt, so daß das Nebelrücklicht (Reflektor 4) ausgeschaltet und die Leitung 11 wieder geschlossen werden, stehen die Glühlampen 9 aller Reflektoren 1 - 4 wieder zur Bildung des Bremslichtes zur Verfügung.

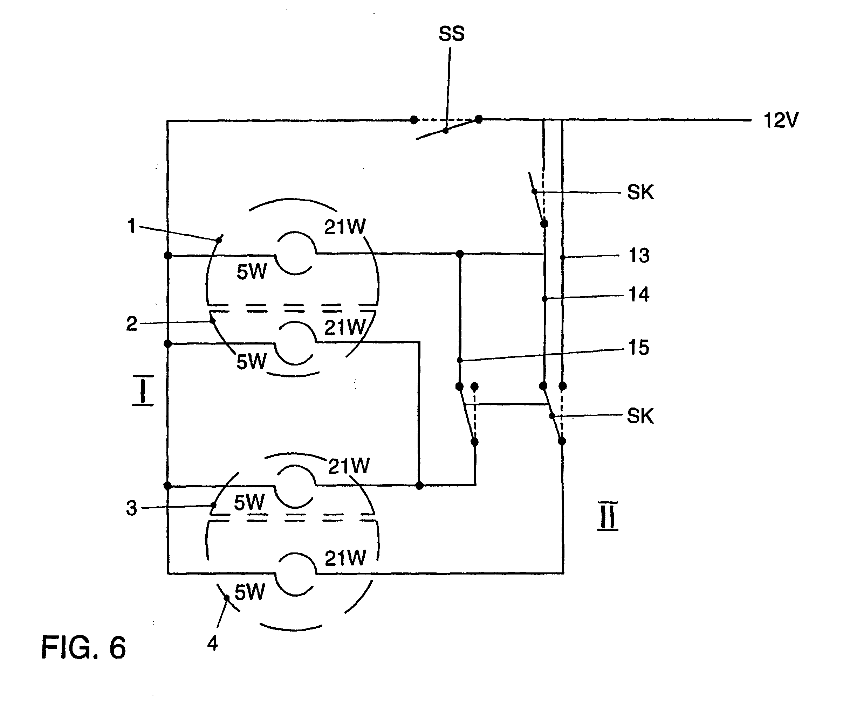

In Fig. 6 ist eine andere Ausführung einer Schaltungsanordnung mit einem (Kreuz-) Schalter SK gezeigt, die ebenso funktioniert wie die vorbeschriebene. Im Unterschied zu dieser schließt der Schalter SK im Stromkreis II entweder die Verbindung zum Nebelrücklicht (Reflektor 4) oder bei Unterbrechung dieser Verbindung zwei Kontakte in den Leitungen 14 und 15, über die die Stromversorgung der Glühlampen 9 der Reflektoren 2 - 4 sichergestellt wird. Bei einer Betätigung des Bremslichtschalters SB werden bei letzterer Stellung des (Kreuz-) Schalters SK - d.h., die Kontakte in den Leitungen 14 und 15 sind geschlossen, und die Leitung 13 ist unterbrochen - die Glühbirnen 9 aller Reflektoren 1 - 4 in der Leistungsstufe 21 W mit Strom versorgt und zur Bildung des Bremslichtes benutzt. Bei geschlossenem Schalter SK, bei dem der Kontakt in der Leitung 13 geschlossen ist und das Nebelrücklicht (Reflektor 4) brennt, wobei die Leitungen 14 und 15 unterbrochen sind, und einer Betätigung des Bremslichtschalters SB wird dann nur die Glühbirne 9 des Reflektors 1 für das Bremslicht mit 21 W benutzt.

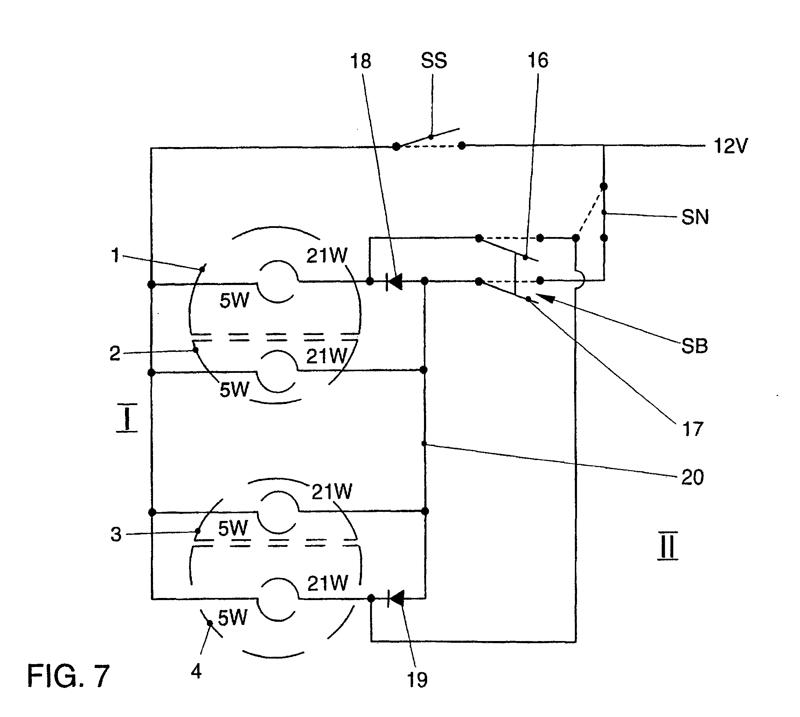

Schließlich zeigt Fig. 7 eine alternative Ausführung einer Schaltungsanordnung für die erfindungsgemäße Rückleuchteneinheit. Bei dieser Schaltungsanordnung weist der Stromkreis II einen Nebelrücklichtschalter SN auf, der in einer von zwei möglichen Stellungen mit dem Nebelrücklicht (Reflektor 4) und zugleich mit einem ersten, mit dem Reflektor 1 gekoppelten Schaltglied 16 des Bremslichtschalters SB verbunden ist. In seiner anderen Stellung (Schaltstellung gemäß Fig. 7) ist der Nebelrücklichtschalter SN bei Unterbrechung der Verbindung zum Nebelrücklicht (Reflektor 4) mit einem zweiten Schaltglied 17 des Bremslichtschalters SB verbunden, das mit allen Reflektoren 1 - 4 verbunden ist. In der Verbindung zu den Glühlampen 9 der im Abstand (A) angeordneten Reflektoren 1 und 4 ist jeweils eine Diode 18 und 19 eingesetzt, um den Stromdurchgang in nur einer Richtung sicherzustellen.

Bei Einschaltung des Nebelrücklichtes (Reflektor 4) durch den Nebelrücklichtschalter SN wird ein Stromdurchgang zu den Reflektoren 1 bis 3 über die Leitung 20 verhindert. Eine Betätigung des Bremslichtschalters SB führt über das Schaltglied 16 zur Stromversorgung der Glühlampe 9 des Reflektors 1 zur Bildung des Bremslichtes. Bei Nichtgebrauch des Nebelrücklichtes (Stellung gemäß Fig. 7) und dem Betätigen (Schließen) des Bremslichtschalters SB mit seinen zwei Schaltgliedern 16 und 17 werden die Glühbirnen 9 sämtlicher Reflektoren 1 - 4 mit Strom versorgt und zur Bildung des Bremslichtes benutzt.

### BEZUGSZEICHENLISTE

- 1: Reflektor
- 2: Reflektor
- 3: Reflektor
- 4: Reflektor
- 5: Trennwand
- 6: Trennwand
- 7: Reflektor
- 8: Reflektor
- 9: Zweifadenlampe
- 10: Einfadenlampe
- 11: Leitung
- 12: Diode
- 13: Leitung
- 14: Leitung
- 15: Leitung
- 16: Schaltglied
- 17: Schaltglied
- 18: Diode
- 19: Diode
- 20: Leitung

## Patentansprüche

1. Rückleuchteneinheit für ein Fahrzeug mit mehreren Reflektoren und zugeordneten Glühlampen zur Bildung eines Schlußlichtes, eines Bremslichtes und eines Nebelrücklichtes und mit Reflektoren und Glühlampen für weitere Lichter sowie mit Licht- und Optikscheiben, wobei das Schlußlicht aus mehreren Reflektoren und Glühlampen gebildet ist, wobei die Reflektoren (1-4) bei Bildung zweier Reflektorenpaare (1/2 und 3/4) in Reihe angeordnet sind **dadurch gekennzeichnet, daß** die beiden außenliegenden Reflektoren (1, 4) Glühlampen (9) mit zwei Leistungsstufen aufweisen und mit der auf die höhere Leistungsstufe geschalteten Glühlampe (9) der Bildung des Bremslichtes und des Nebelrücklichtes dienen und diese Reflektoren (1/4) in einem Abstand zueinander angeordnet sind, der wenigstens dem gesetzlich geforderten Mindestabstand (A) zwischen dem Bremslicht und dem Nebelrücklicht entspricht.

2. Rückleuchteneinheit nach Anspruch 1, **dadurch gekennzeichnet, daß** alle Reflektoren (1 - 4) Glühlampen (9) mit zwei Leistungsstufen aufweisen, und daß bei Nichtgebrauch des Nebelrücklichtes alle Reflektoren (1 - 4) das Bremslicht bilden und bei Gebrauch des Nebelrücklichtes nur der zu diesem im geforderten Mindestabstand (A) angeordnete Reflektor.

3. Rückleuchteneinheit nach Anspruch 1 oder 2, **dadurch gekennzeichnet, daß** die Betriebszustände der Glühlampen (9) - Nulleistung _ niedrige Leistung _ höhere Leistung - und der Glühlampen (10) - Nulleistung _ (niedrige) Leistung - durch eine elektronische Schaltung gesteuert werden.

4. Rückleuchteneinheit nach Anspruch 1, **dadurch gekennzeichnet, daß** als Glühlampen (9) für das Bremslicht und das Nebelrücklicht Zweifadenlampen verwendet werden.

5. Rückleuchteneinheit nach Anspruch 1, **dadurch gekennzeichnet, daß** die Austrittsöffnungen der jeweils zu einem Paar vereinten Reflektoren (1/2 und 3/4) in der Hauptansicht zusammen eine Kreisfläche bilden und die jeweils in den beiden Austrittsöffnungen gegebene Trennwand (5, 6) als geradliniger Steg erscheint, und daß die Stege parallel und im geforderten Mindestabstand (A) zwischen dem Bremslicht und dem Nebelrücklicht zueinander angeordnet sind.

6. Rückleuchteneinheit nach Anspruch 5, **dadurch gekennzeichnet, daß** die Reflektorpaare (1/2 und 3/4) vertikal und im Abstand übereinander angeordnet sind, daß zwischen diesen der Reflektor (7) für das Rückfahrlicht und jeweils fahrzeugaußenseitig neben diesem der Reflektor (8) für das Blinklicht angeordnet sind.

7. Rückleuchteneinheit nach Anspruch 6, **dadurch gekennzeichnet, daß** den einander zugewandten Reflektoren (2, 3), dem Reflektor (7) für das Rückfahrlicht und dem Reflektor (8) für das Blinklicht eine Streu-/ Zylinderoptik zugeordnet ist.

8. Schaltungsanordnung für eine Rückleuchteneinheit mit vier Reflektoren zur Bildung des Schlußlichtes, des Bremslichtes und des Nebelrücklichtes, bei der jedem Reflektor eine Glühlampe mit zwei Leistungsstufen zugeordnet ist und bei der bei Nichtgebrauch des Nebelrücklichtes alle Glühlampen mit der höheren Leistungsstufe und alle Reflektoren das Bremslicht bilden und bei Gebrauch des Nebelrücklichtes nur ein zu diesem im gesetzlich geforderten Mindestabstand (A) angeordneter Reflektor und die diesem zugeordnete Glühlampe, wobei die Glühlampen (9) zum Schalten der unterschiedlichen Leistungsstufen in zwei Stromkreisen (I, II) eingebunden sind, von denen der für die Stromversorgung der höheren Leistungsstufe vorgesehene Stromkreis (II) einen Schalter (SK) aufweist, der bei Einschaltung des Nebelrücklichtes (Reflektor 4) zugleich die Stromversorgung der zur Bildung des Bremslichtes nicht vorgesehenen Glühlampen (9) und Reflektoren unterbricht und umgekehrt, oder daß der Stromkreis (II) einen Nebelrücklichtschalter (SN) aufweist, der in einer ersten Stellung mit dem Nebelrücklicht (Reflektor 4) und zugleich über ein erstes Schaltglied (16) des Bremslichtschalters (SB) mit dem im Abstand (A) angeordneten Bremslicht (Reflektor 1) verbunden ist, und der in einer zweiten Stellung über ein zweites Schaltglied (17) des Bremslichtschalters (SB) und eine Leitung (20) mit sämtlichen Glühlampen (9) verbunden ist, wobei in der Verbindung (Leitung 20) zu den Glühlampen der im Abstand (A) angeordneten Reflektoren (1 und 4) jeweils eine Diode (18, 19) eingesetzt ist.

9. Schaltungsanordnung nach Anspruch 8, **dadurch gekennzeichnet, daß** der Stromkreis (II) eine erste Leitung (11) mit einem Bremslichtschalter (SB) aufweist, mit der die Glühlampen (9) aller Reflektoren (1 - 4) verbunden sind, wobei vor der Glühlampe (9) zur Bildung des Nebelrücklichtes (Reflektor 4) eine Diode (12) angeordnet ist, und eine zweite Leitung (13) zur Versorgung nur der Glühlampe (9) des Reflektors (4) aufweist, und daß der (Kreuz-) Schalter (SK) in der Leitung (13) und zwischen der Glühlampe (9) des Reflektors (1) und der des Reflektors (2) in der Leitung (11) angeordnet ist.

10. Schaltungsanordnung nach Anspruch 8 oder 9, **dadurch gekennzeichnet, daß** die Glühlampen (9) bei gleichzeitigem Betrieb des Schlußlichtes, des Nebelrücklichtes und des Bremslichtes entweder alternativ in ihren Leistungsstufen oder unter Addition ihrer Leistungsstufen betrieben werden.

## Claims

1. Rear light unit for a vehicle having a plurality of reflectors and assigned filament lamps for forming a tail light, a brake light and a rear fog light and having reflectors and filament lamps for further lights, and having lenses, the tail light being formed from a plurality of reflectors and filament lamps and the reflectors (1-4) being arranged in series when two pairs of reflectors (1/2 and 3/4) are formed, **characterized in that** the two outermost reflectors (1, 4) have filament lamps (9) with two power levels and serve, with the filament lamp (9) connected to the higher power stage, to form the brake light and the rear fog light, and these reflectors (1/4) are arranged at a distance from one another which corresponds at least to the legally required minimum distance (A) between the brake light and the rear fog light.

2. Rear light unit according to Claim 1, **characterized in that** all the reflectors (1-4) have filament lamps (9) with two power levels, and **in that**, when the rear fog light is not in use, all the reflectors (1-4) form the brake light, and when the rear fog light is in use only the reflector arranged at the required minimum distance (A) therefrom forms the brake light.

3. Rear light unit according to Claim 1 or 2, **characterized in that** the operating states of the filament lamps (9) - zero power_ low power_ higher power - and of the filament lamps (10) - zero power_ (low) power - are controlled by an electronic circuit.

4. Rear light unit according to Claim 1, **characterized in that** dual-filament lamps are used as filament lamps (9) for the brake light and for the rear fog light.

5. Rear light unit according to Claim 1, **characterized in that** the outlet openings of the reflectors (1/2 and 3/4) which are each combined to form a pair form together a circular area in the main view and the dividing wall (5/6) which is respectively provided in the two outlet openings appears as a linear web, and **in that** the webs are arranged in parallel and at the required minimum distance (A) from one another between the brake light and the rear fog light.

6. Rear light unit according to Claim 5, **characterized in that** the reflector pairs (1/2 and 3/4) are arranged vertically and at a distance one above the other, **in that** the reflector (7) for the reversing light is arranged between the latter and in each case the reflector (8) for the indicator light is arranged next to said reversing light on the far side of the vehicle.

7. Rear light unit according to Claim 6, **characterized in that** a diffusion/cylindrical optical device is assigned to the reflectors (2, 3) which face one another, to the reflector (7) for the reversing light and to the reflector (8) for the indicator light.

8. Circuit arrangement for a rear light unit having four reflectors to form the tail light, the brake light and the rear fog light, in which each reflector is assigned a filament lamp with two power levels and in which, when the rear fog light is not in use, all the filament lamps with the higher power stage and all the reflectors form the brake light, and when the rear fog light is not in use only a reflector which is arranged at the legally required minimum distance (A) from said rear fog light and the filament lamp assigned to said reflector form the brake light, the filament lamps (9) being connected into two circuits (I, II) for switching the different power levels, of which circuits (I, II) the circuit (II) which is provided for supplying power to the higher power stage hasa switch (SK) which, when the rear fog light (reflector 4) is switched on, simultaneously interrupts the power supply to the filament lamps (9) and reflectors which are not provided for the formation of the brake light, and vice versa, or the circuit (II) having a rear fog light switch (SN) which, in a first position, is connected to the rear fog light (reflector 4) and at the same time via a first switching element (16) of the brake light switch (SB) to the brake light (reflector 1) which is arranged at a distance (A), and which in a second position is connected to all the filament lamps (9) via a second switching element (17) of the brake light switch (SB) and a line (20), in each case a diode (18, 19) being inserted into the connection (line 20) to the filament lamps of the reflectors (1 and 4) which are arranged at a distance (A).

9. Circuit arrangement according to Claim 8, **characterized in that** the circuit (II) has a first line (11) with a brake light switch (SB) with which the filament lamps (9) of all the reflectors (1-4) are connected, a diode (12) being arranged upstream of the filament lamp (9) for forming the rear fog light (reflector 4), and has a second line (13) for supplying only the filament lamp (9) of the reflector (4), and **in that** the (cross) switch (SK) is arranged in the line (13) and between the filament lamp (9) of the reflector (1) and that of the reflector (2) in the line (11).

10. Circuit arrangement according to Claim 8 or 9, **characterized in that**, when the tail light, the rear fog light and the brake light are operating simultaneously, the filament lamps (9) are either operated alternatively in their power levels or by adding their power levels.

## Revendications

1. Unité d'éclairage arrière pour un véhicule, avec plusieurs réflecteurs et les lampes à incandescence associées, pour former un feu arrière, un feu stop et un feu antibrouillard, et avec des réflecteurs et des lampes à incandescence pour d'autres feux de position, ainsi qu'avec des vitres de feu et d'optique, le feu de position étant constitué de plusieurs réflecteurs et lampes à incandescence, les réflecteurs (1 à 4) étant disposés en série pour former deux paires de réflecteurs (1/2 et 3/4), **caractérisée en ce que** les deux réflecteurs (1, 4) situés à l'extérieur présentent des lampes à incandescence (9) à deux étages de puissance et servent avec les lampes à incandescence (9) branchées sur l'étage de puissance supérieure à former le feu stop et le feu antibrouillard, ces réflecteurs (1/4) étant disposés l'un par rapport à l'autre à une distance qui correspond au moins à la distance minimale (A) imposée par la loi entre le feu stop et le feu antibrouillard.

2. Unité d'éclairage arrière selon la revendication 1, **caractérisée en ce que** tous les réflecteurs (1 à 4) présentent des lampes à incandescence (9) présentant chacune deux étages de puissance, et **en ce que** lorsque le feu antibrouillard n'est pas utilisé, tous les réflecteurs (1 à 4) forment le feu stop, et lorsque le feu antibrouillard est utilisé, ils forment uniquement le réflecteur disposé par rapport à ce dernier à la distance minimale (A) imposée.

3. Unité d'éclairage arrière selon la revendication 1 ou 2, **caractérisée en ce que** les états de fonctionnement des lampes à incandescence (9), à savoir puissance nulle, basse puissance, haute puissance, et des lampes à incandescence (10), à savoir puissance nulle, (basse) puissance, sont commandés par un circuit électronique.

4. Unité d'éclairage arrière selon la revendication 1, **caractérisée en ce que** l'on utilise comme lampes à incandescence (9) pour le feu stop et le feu antibrouillard des lampes à deux filaments.

5. Unité d'éclairage arrière selon la revendication 1, **caractérisée en ce que** les ouvertures de sortie des réflecteurs (1/2 et 3/4) chaque fois rassemblés en une paire forment ensemble une surface circulaire dans une vue principale, et la paroi de séparation (5, 6) chaque fois définie dans les deux ouvertures de sortie présente la forme d'une paroi rectiligne, et **en ce que** les parois sont disposées parallèlement l'une à l'autre et à la distance minimale (A) imposée entre le feu stop et le feu antibrouillard.

6. Unité d'éclairage arrière selon la revendication 5, **caractérisée en ce que** les paires de réflecteurs (1/2 et 3/4) sont disposées à la verticale et à distance l'une au-dessus de l'autre, et **en ce que** le réflecteur (7) pour le feu de recul est disposé entre celles-ci, et le réflecteur (8) pour le feu clignotant est chaque fois disposé à côté de celles-ci, du côté extérieur du véhicule.

7. Unité d'éclairage arrière selon la revendication 6, **caractérisée en ce qu'**une optique de dispersion/cylindrique est associée aux réflecteurs (2, 3) tournés l'un vers l'autre, au réflecteur (7) pour le feu de recul et au réflecteur (8) pour le clignotant.

8. Circuit pour une unité d'éclairage arrière à quatre réflecteurs pour formation du feu arrière, du feu de stop et du feu antibrouillard, dans lequel une lampe à incandescence à deux étages de puissance est associée à chaque réflecteur et dans lequel, lorsque le feu antibrouillard n'est pas utilisé, toutes les lampes à incandescence fonctionnant à l'étage de puissance supérieure et tous les réflecteurs forment le feu de frein, et lorsque le feu antibrouillard est utilisé, seul un réflecteur, disposé par rapport à ce dernier à la distance minimale (A) imposée par la loi et les lampes à incandescence associées à celui-ci forment le feu stop, les lampes à incandescence (9) étant reliées pour le branchement des différents étages de puissance à deux circuits de courant (I, II) parmi lesquels le circuit de courant (II) prévu pour l'alimentation en courant de l'étage de puissance supérieure présente un commutateur (SK) qui, lorsque le feu antibrouillard (réflecteur 4) est branché, assure en même temps l'alimentation en courant des lampes à incandescence (9) et réflecteurs non prévus pour former le feu stop et inversement, ou en ce que le circuit de courant (II) présente un commutateur de feu antibrouillard (SN) qui est relié dans une première position au feu antibrouillard (réflecteur 4) et de même, par un premier organe de commutation (16) du commutateur de feu stop (SB) au feu stop (réflecteur 1) disposé à distance (A), et qui, dans une deuxième position, est relié par un deuxième organe de commutation (17) du commutateur de feu stop (SB) et un conducteur (20) à l'ensemble des lampes à incandescence (9), une diode (18, 19) étant chaque fois placée dans la liaison (conducteur 20) vers les lampes à incandescence des réflecteurs (1 et 4) disposées à la distance (A).

9. Circuit selon la revendication 8, **caractérisé en ce que** les circuits de courant (II) présentent un conducteur (11) avec un commutateur de feu stop (SB), par lequel les lampes à incandescence (9) de tous les réflecteurs (1 à 4) sont reliés, une diode (12) étant disposée en amont de la lampe à incandescence (9) destinée à former le feu antibrouillard (réflecteur 4) et un deuxième conducteur (13) destiné à alimenter uniquement la lampe à incandescence (9) du réflecteur (4), et **en ce que** le commutateur (en croix) (SK) est disposé vers le conducteur (13) et entre la lampe à incandescence (9) du réflecteur (1) et celle du réflecteur (2) dans le conducteur (11).

10. Circuit selon la revendication 8 ou 9, **caractérisé en ce que** les lampes à incandescence (9) sont utilisées alternativement à leurs étages de puissance ou par addition de leurs étages de puissance pour l'utilisation simultanée du feu arrière, du feu antibrouillard et du feu stop.
